# EUROPEAN PATENT APPLICATION

(11) **EP 1 318 346 A2**
(43) Date of publication of application: **11.06.2003**
(21) Application number: 02027521.0
(22) Date of filing: 06.12.2002
(51) Int. Cl.: F16T 1/00

(54) **Automatic drain for compressed air system**

(30) Priority: 07.12.2001 US 340586 P; 19.11.2002 US 299557
(71) Applicant: Hansen, Inc., Pittsburgh, Pennsylvania 15225 (US)
(72) Inventor: Dobies, Stephen P., Oakdale, Pennsylvania 15071 (US); Dawson, Paul H., Greensburg, Pennsylvania 15601 (US); McKisic, Aubra D., Baden, Pennsylvania 15005 (US)
(74) Representative: Banzer, Hans-Jörg, Dipl.-Ing.

(57) **Abstract**

An automatic drain for a compressed air system can have a valve body (16) containing an internal fluid reservoir (19) which communicates via a main air inlet passage (25) with a compressed air container (7) such that fluid can flow from the air container into the internal reservoir. A filter (31) can be provided prior to the internal reservoir (19) so that only fluid passes into the internal reservoir. Accumulated fluid in the internal reservoir (19) can be drained through a discharge port (58) regulated by a valve assembly (55) which can be opened and closed by a controller (60) in response to the level of fluid accumulated in the internal reservoir (19) as detected by a sensor (52).

## Description

### BACKGROUND

This invention relates generally to devices for removing liquids and/or particles from compressed air systems, and more particularly, to a self activating drain for removing liquid and particles from a locomotive compressed air system.

The compressed air systems found on locomotives offer many of the same benefits and problems as stationary systems. Among the associated problems is the necessity to remove various liquids and particles which become entrained in the airflow system. Locomotive maintenance practices, especially with the compressors, result in more severe conditions than normally seen in stationary applications. Locomotive compressed air systems in use today commonly include drains for removing liquids and particles suspended in the liquids. However, conventional drains are often problematic, because they typically allow for the escape of air along with the entrained liquid and particles. For example, conventional drains based on steam trap valves operate on thermodynamic principles instead of the need to discharge liquid. This not only results in the unwanted discharge of air, but also generates noise to such levels and annoyance that workers often engage the shutoff valves, which eliminates the air loss and associated noise, but also renders the drains useless. Contamination in the fluids can also cause the conventional drains to function improperly.

More sophisticated drains are also known in the art, such as solenoid actuated valves which can be controlled in a manner intended to minimize air loss during operation of the valve to discharge fluid and particles. The operation of these drains include actuation based on compressor operation and sensor detection of liquids in the valve body itself. This type of operation does offer improvements over the less sophisticated steam trap based drains described previously. However, although to a lesser degree than the steam trap valves, the solenoid operated drains can nevertheless also permit a not insignificant amount of air to be discharged along with the fluid. Additionally, these solenoid actuated valves can often be susceptible to failure due to contaminants in the fluid.

Drains are necessary to remove liquids and particles from the compressed air system. A failure to do so permits the liquid, and any entrained contaminants, to be carried downstream which can result in damage to, or failure of, the supplied pneumatic systems. This, in turn, can lead to increased maintenance costs and safety dangers. However, unwanted air discharge permitted by conventional drains causes increased compressor activity, which results in excess wear for the compressed air system as well as increased fuel consumption. In general, the problems attendant with known drains, including safety implications, increased maintenance costs, increased fuel consumption, and increased emissions, have all led the railroads to seek improved drains for locomotive compressed air systems. Consequently, there exists a need for a drain which can remove liquids and other contaminants from the compressed air system while overcoming the problems associated with conventional drains.

### SUMMARY

According to the present invention, an automatic drain having the features of claim 1 is provided. The dependent claims define preferred and advantageous embodiments of the invention.

The invention provides an automatic drain for collecting and expelling liquid and contaminants from a compressed air storage tank, such as, for example, a compressed air tank which is part of a locomotive compressed air system. The automatic drain can include a body enclosing an internal fluid reservoir and a filter. A main air inlet passage can be provided communicating between an outlet port of a compressed air tank and the filter. The fluid and entrained contaminants from the compressed air tank are first directed through the filter, which traps particulate contaminants entrained in the fluid, such that only the fluid passes into the internal reservoir. A fluid discharge port is provided for draining the fluid from the internal reservoir. Access to the fluid discharge port can be controlled by a valve assembly which can be operated automatically by a controller. A sensor can be included to sense the fluid level in the internal reservoir and provide feedback to the controller for opening the valve assembly to drain fluid from the internal reservoir when the fluid level reaches a predetermined level. The sensor can be an ultrasonic type sensor. The controller can be an electronic device, and the valve assembly can include a main stage valve which is piloted by a solenoid actuated valve. When feedback from the sensor indicates that the fluid level in the internal reservoir has reached the predetermined limit, the controller actuates the solenoid pilot valve to cause the main stage valve to open the discharge port so that the accumulated fluid can drain from the internal reservoir. The controller can deactivate the solenoid valve to cause the main stage valve to close the discharge port after all, or most, of the accumulated fluid has drained from the internal reservoir. Various ways of implementing the proper time to close the discharge port can be devised. For example, the controller can simply deactivate the solenoid valve after expiration of a predetermined amount of time. Generally, for practical purposes, the discharge port should be closed just before all of the accumulated fluid has drained from the reservoir in order to prevent unnecessary discharge of pressurized air by the drain, which would otherwise occur after all of the fluid had drained out. The filter can be designed for easy removal for cleaning or replacement at regular intervals to ensure efficient operation of the automatic drain.

Other details, objects, and advantages of the invention will become apparent from the following detailed description and the accompanying drawings figures of certain embodiments thereof.

### BRIEF DESCRIPTION OF THE DRAWING FIGURES

A more complete understanding of the invention can be obtained by considering the following detailed description in conjunction with the accompanying drawings, in which:
FIG. 1 is a perspective view of an embodiment of a self activating drain.
FIG. 2 is a top view, with the top cover removed, of an embodiment of a self activating drain.
FIG. 3 is a side view of the drain shown in Figure 2.
FIG. 4 is a front view of the drain shown in Figure 2.
FIG. 5 is a view taken along line V-V in FIG 2.
FIG. 6 is a view taken along line VI-VI in FIG 2.
FIG. 7 is a view taken along line VII-VII in FIG 2.
FIG. 8 is an enlarged view of section VIII in FIG 7.
FIG. 9 is an enlarged view of section IX in FIG 6.
FIG. 10 is a top view, with the top cover removed, of another embodiment of a self activating drain.
FIG. 11 is a view taken along line XI-XI in FIG 10.
FIG. 12 is a view taken along line XII-XII in FIG 10.
FIG. 13 is a view taken along line XIII-XIII in FIG 10.
FIG. 14 is an enlarged view of section XIV in FIG 13.
FIG. 15 is an enlarged view of section XV in FIG 12.

### DETAILED DESCRIPTION OF CERTAIN EMBODIMENTS

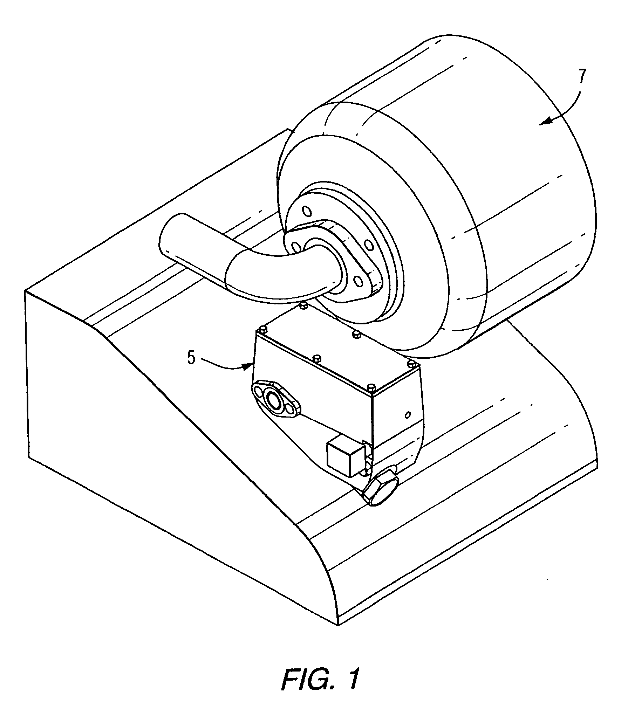

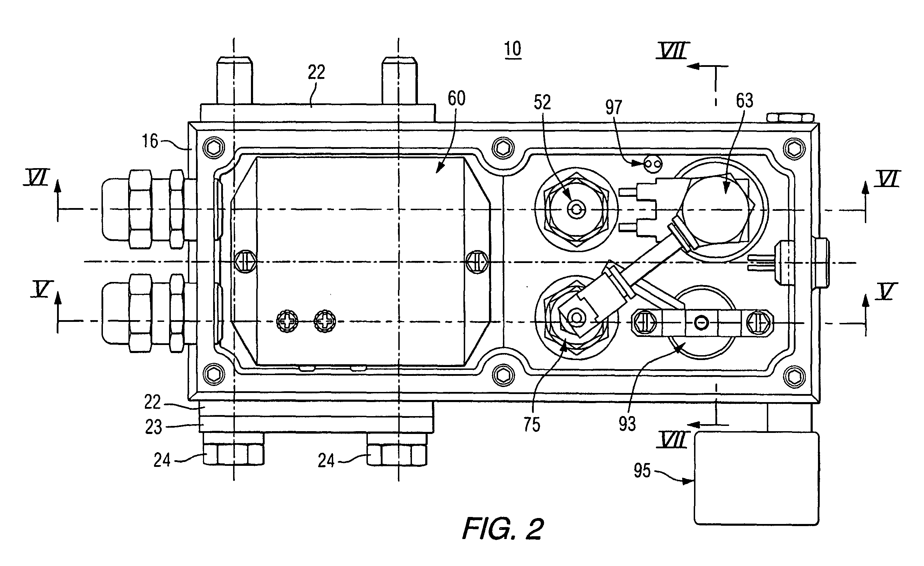

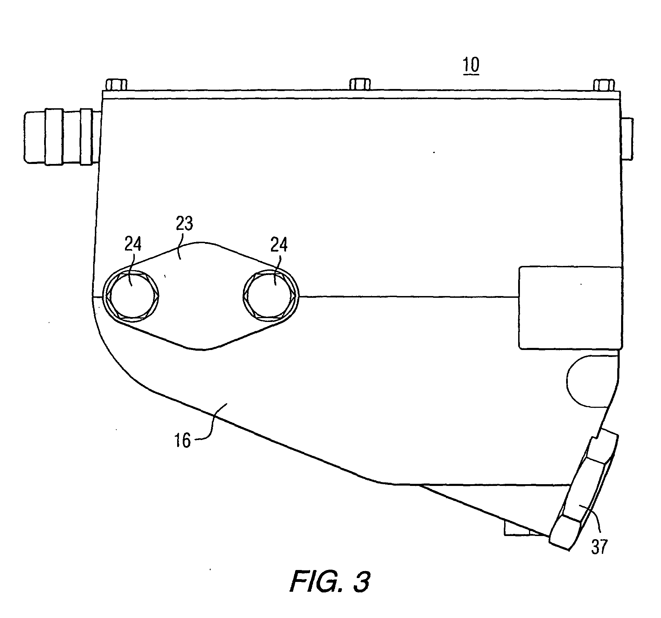

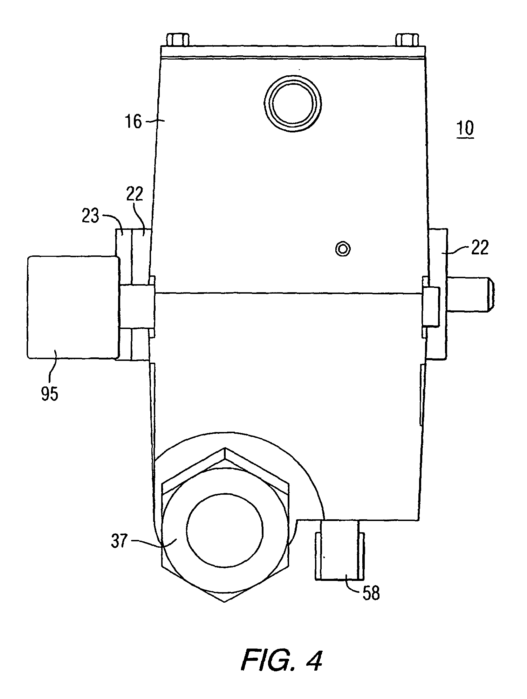

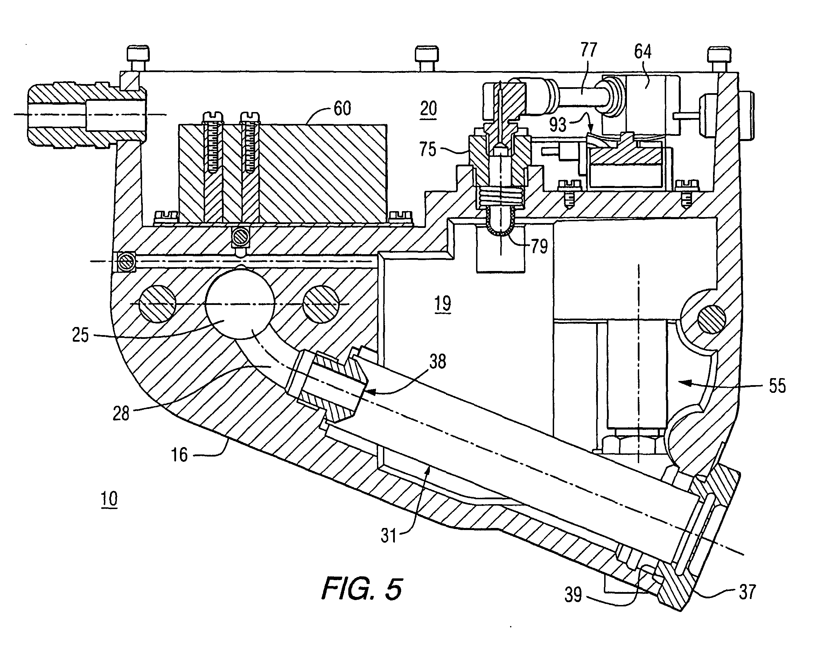

Referring now to the drawing figures wherein like reference numbers refer to similar parts throughout the several views, an embodiment of a self activating drain 5 is shown in FIG. 1 connected to a main air tank 7 of a locomotive compressed air system. FIGS. 2 through 4 show top (cover removed), side, and front views of an embodiment of a drain 10. As illustrated in greater detail in FIGS. 5 through 9, the drain 10 can generally comprise a body 16, an internal reservoir 19 formed inside the body 16 to serve as a reservoir for fluid accumulated from the main air tank 7, a filter 31 disposed between the main air tank 7 and the internal reservoir, and a valve assembly 55 connected to a fluid discharge port 58 for emptying fluid from the internal reservoir 19.

A first main air inlet passage 25, which can be generally horizontal, is provided in association with the mounting portion 22, and in communication with an air exit port (not shown) on the main air tank 7 when the body 16 of the valve 10 is connected to the main air tank 7. Mounting portions 22 can be provided on one or both sides of the body 16 to permit mounting either side of the drain 10 to the main air tank 7. Where a mounting portion 22 is provided on each side of the body 16, the main air inlet passage 25 can be provided extending through the body 16, such that opposite ends of the main air inlet passage 25 communicate with the mounting portions 22 on each side of the drain 10. In this manner, mounting of the drain 10 to the main air tank 7 via the exit port connected on either side of the drain 10 is facilitated. Depending on which side of the drain body 16 is connected to the main air tank 7, the opposite end of the main air inlet passage 25 communicating with the opposite side of the drain body 16 can be closed off by means of a cover plate 23 and a suitable seal (neither shown), such as an o-ring. The cover plate 23 can be secured to the mounting portion 22 on the drain body 16 by, for example, bolts 24 that can extend through two aligned holes in the both the cover plate 23 and the body 16. The automatic drain 10 can similarly be connected to the main air tank via the opposite mounting portion 22 on the drain body 16, such as either by two holes in a mounting flange, or two tapped holes. Also, similarly to the cover plate 23 securement, a seal, such as an o-ring, can be placed between the mounting portion 22 and the exit port face of the main air tank 7 in order to prevent leakage of air or fluid.

A fluid passage 28 can be provided communicating between the main air inlet passage 25 and the internal fluid reservoir 19. However, a filter 31 can be interposed intermediate the fluid passage 28 and the internal fluid reservoir 19. Consequently, fluid and any entrained contaminants entering fluid passage 28 must first pass through the filter 31, which traps particulates, debris and other contaminants that could otherwise interfere with the operation of the drain 10. In particular, the valve assembly 55 can include a seal 56 and an control orifice member 57 through which the fluid exits the drain 10 at the discharge port 58. The dimensions of the control orifice member 57 can be designed to cause a certain amount of fluid to be purged from the internal reservoir 19 through the discharge port 58 over a certain period of time. Debris, if not removed by the filter 31, could interfere with the function of the seal 56 to fully seat against the control orifice member 57. Such debris could also obstruct the control orifice member 57 and thereby hinder the purge of fluid from the internal reservoir 19. The filter 31 can be removable for regular cleaning in order to prevent the filter 31 from becoming clogged, which could block fluid from passing into the internal reservoir 19 from which it could be expelled. For example, a cavity in the drain body 16 can be provided wherein the generally cylindrical filter 31 can be removably positioned The cavity can be accessed externally via a removable plug 37 to facilitate cleaning or replacement of the filter 31. The lower end of the cavity 34, i.e., the end through which the filter 31 is removed, can be threaded internally and the plug 37 can have external threads so that the plug 37 can simply be screwed into the cavity for easy access to the filter 31. The filter 31 is designed to be quickly and easily removed to facilitate cleaning and/or replacement on a periodic basis. Additionally, the threaded end of the removable plug 37 can further have a recessed cylindrical bore which is sized to receive the lower end of the cylindrical filter 31 when the plug 37 is screwed into the lower end of the cavity 34. The opposite, i.e., upper, end of the cylindrical filter 31 communicates with the fluid passage 28 such that fluid and entrained contaminants entering the drain 10 are initially directed through the cylindrical filter 31 so that particulate contaminants are trapped and only fluid may enter into the internal reservoir 19. A nozzle 38 can be provided in the upper end of the cavity intermediate the fluid passage 28 and the cylindrical filter 31. One end of the nozzle 38 communicates with the fluid passage 28 and an opposite end can be designed to seal against the upper end of the cylindrical filter 31. In order to avoid any potential for particulate contaminants entering the internal fluid reservoir 19, both ends of the filter 31 can have a close fit with the respective adjacent surfaces, i.e., the nozzle 38 at the top and the plug 37 at the bottom. As a safety feature, the plug 37 can be designed to vent pressure which may be built up inside the drain body before the plug 37 reaches a completely unthreaded condition. This can be accomplished in any of a number of different manners well known to those of skill in the art. For example, a cross-drilled hole 39 can be provided through the end of the plug 37 which threads into the body 16. Alternatively, a slot milled generally longitudinally in the threads of the plug 37 could also accomplish this function.

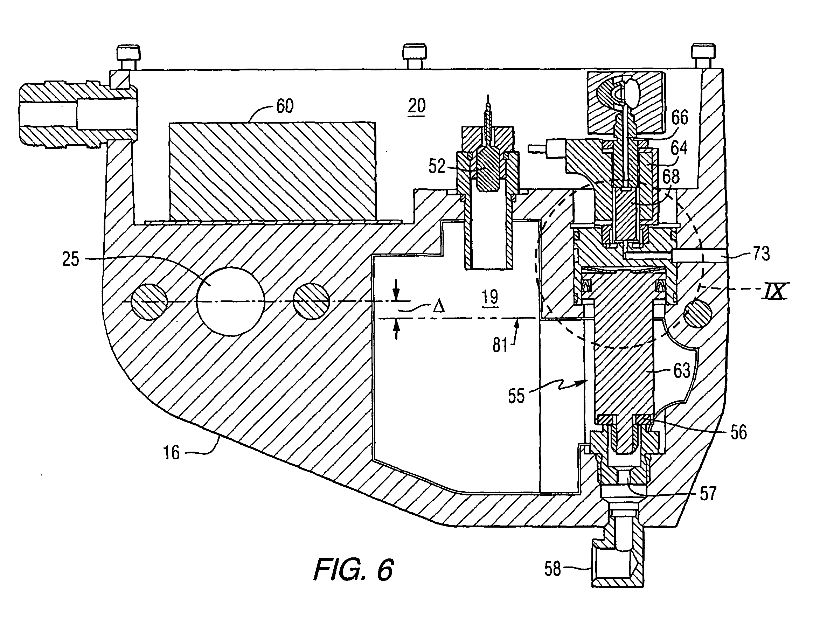

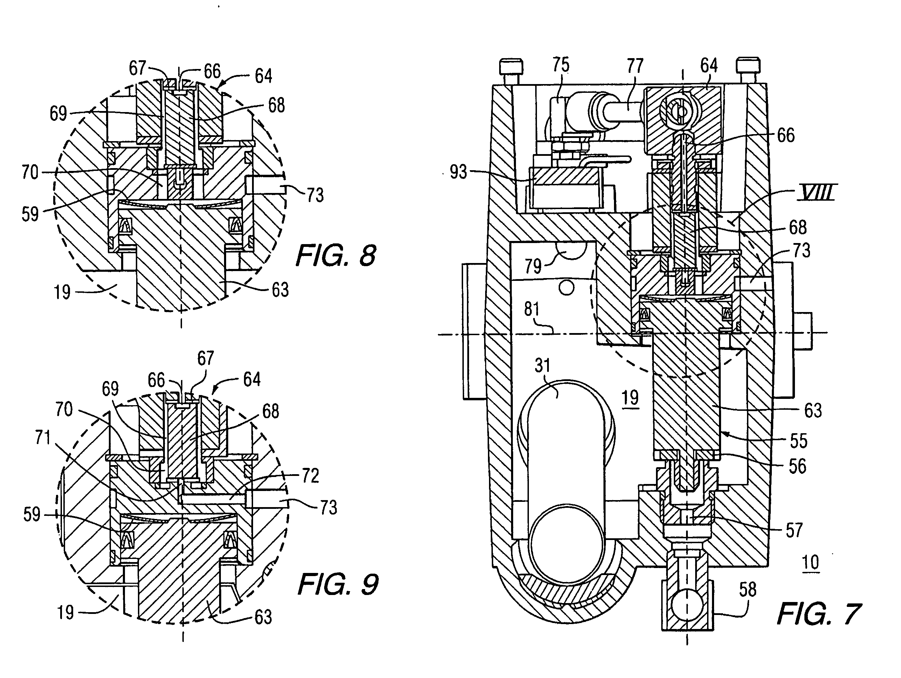

The self actuating drain 10 can have a sensor 52 to detect the level of accumulated fluid in the internal reservoir 19. The sensor 52 can automatically activate a valve assembly 55 to expel the accumulated fluid through a fluid discharge port 58 in the internal reservoir 19 when the fluid therein reaches a predetermined level, as indicated by line 81 in FIGS. 6 and 7. This level 81 can be set a certain distance "Δ," which can be about 0.25 inches, below the level of generally the center of main air passage 25. The sensor 52 can provide feedback to a control module 60 regarding the fluid level in the internal reservoir 19. When feedback from the sensor 52 to the control module 60 indicates that the level of fluid in the internal reservoir 19 has reached the predetermined level, the valve assembly 55 can be activated by the control module 60 to open the fluid discharge port 58 and drain accumulated fluid from the internal reservoir 19.

The valve assembly 55 can include a main stage valve piston 63 which controls access to the fluid discharge port 58. In the embodiment of Figures 2 through 9, the main stage valve piston 63 can be held normally closed by a differential pressure across the fluid discharge port 58. This pressure differential is the difference between the pressure in the internal reservoir 19, which is generally equal to the compressed air system pressure, for example 120 to 140 psi, and atmospheric pressure on the outside. Additionally, a preload, such as can be created using a spring washer 59 on the top of the main stage valve piston 63, can also be provided to supplement the closing force so that a failsafe mode is present in the event that the compressed air system were to lose pressure.

The valve assembly 55 can include a pilot valve 64 to control the main stage valve piston 63. In the embodiment shown, the pilot valve 64 can be a 3-way normally open solenoid actuated valve. The top portion 20 of the self actuating drain 10 can be at atmospheric pressure. Internal reservoir 19 pressure can be used as pilot pressure for the pilot valve 64. For example, a fitting 75 can be provided having one end communicating with the internal reservoir and an opposite end communicating with the pilot valve 64 via a tube 77 provided connected the internal reservoir 19. At the end of the fitting 75 communicating with the internal reservoir 19, a screen 79 can be provided to generally block out small particles of debris or other contaminants which may have been small enough to enter into the internal reservoir through the filter 31. Such debris could interfere with the proper functioning of the pilot valve 64.

As can be best understood from the enlarged section views in FIGS. 8 and 9, the pilot valve 64 can preferably be held normally open, in the de-energized state illustrated, wherein pressurized air from the internal reservoir 19 can communicate through the tube 77 to passageway 66 into space 67 on top of the solenoid 68, and thence into the space 69 around the sides thereof. From there, the pressure can be communicated onto the top of the main stage valve piston 63 by providing appropriate porting, for example ports 70. This pressure acts to hold the piston 63 closed against the fluid discharge port 58. This feature, along with the preload spring washer 59, can provide failsafe operation even without electrical power. When the coil of the pilot valve 64 is energized, the solenoid 68 moves up, closing off the tube 77 and cutting off access to the space 67 on top of the solenoid 68 and also around the sides thereof. This closes off communication of internal reservoir 19 pressure on the top of the main stage valve piston 63. Upward movement of the solenoid 68 also vents pressure on top of the main stage valve piston 63 by connecting ports 70 to atmosphere via small vertically oriented bleed port 71 which is connected to horizontal passageway 72 and thence to exhaust port 73 in the side of the valve body 13. When the air acting on top of the main stage valve piston 63 is ported to atmosphere, a large pressure differential is created across the main stage valve piston 63 which allows internal reservoir 19 pressure to unseat the main stage valve piston 63 from the discharge port 58. The main stage valve piston 63 can be held open, such as for a predetermined time period by the control module 60, to permit accumulated fluid to drain from the internal reservoir 19. Upward movement of the solenoid 68 also cuts off passageway 66 communication with space 67, thus cutting off communication with internal reservoir 19 pressure via tube 77. Thus, only a small volume of pressurized air which was acting on top of the main stage valve piston 63 will be vented to atmosphere.

The activation of the solenoid pilot valve 64 can be regulated by the control module 60 based on receive feedback from the sensor 52 that detects the fluid level in the internal reservoir 19. In the embodiment shown, the sensor 52 can be an ultrasonic sensor. When the fluid level reaches the predetermined level, the control module 60 can energize the pilot valve 64 to open the main valve piston 63 and permit accumulated fluid to drain from the internal reservoir 19. The control module 60 can, via the pilot valve 64, cause the main stage valve piston 63 to remain unseated for a predetermined time period, for example, about one-quarter of a second, prior to permitting the piston 63 to reseat and close the fluid discharge port 58. Pressurized air would also be discharged through the fluid discharge port 58 if the discharge port 58 were to remain open after all of the fluid had been discharged. Therefore, the time interval for holding the main stage valve piston 63 open can be set so as to allow only accumulated fluid in the internal reservoir to drain, and to generally prevent the escape of pressurized air through the fluid discharge port 58. A manual shut-off switch can also be provided (not shown) which closes off communication between the air tank 7 and the internal reservoir 19.

It is known to use sensors which detect the high and low fluid levels to control fluid discharge timing. However, implementing this function can require additional logic in the control module 60 in order to distinguish between fluid levels and close the discharge port based upon the fluid level falling to a certain level. Consequently, controlling closure of the fluid discharge port 58 using a timed method can provide a less expensive and sufficiently effective method. Nevertheless, it should be understood that a multiple fluid level sensing scheme could also be utilized by a drain 10 according to the invention to control closure of the fluid discharge port 58.

The drain 10 can further include a temperature sensor 93, a heater unit 95 positioned outside the drain body 16, and a cartridge heater 97 located within the drain body 16. The heater unit 95 and cartridge heater 97 can be utilized to heat the drain body 16, and thus the internal reservoir 19. The temperature sensor 93 can detect the temperature, such as, for example, the prevailing temperature in the internal reservoir 19 and/or the ambient temperature. Responsive to detecting that the temperature has dropped below a predetermined temperature, such as could cause fluid in the internal reservoir 19 to freeze, the heater unit 95 and/or cartridge heater 97 can be activated to increase the temperature in the internal reservoir 19. In one embodiment, the temperature sensor 93 can be a temperature switch connected to the cartridge heater 97 to directly activate heating responsive to detection of a predetermined temperature. Also, the heater unit 95 can include an integral temperature sensor therewith and can operate entirely independently of the cartridge heater 97. Alternatively, the temperature sensor 93 could be designed to provide feedback to the control module 60 which could be connected, for activation thereof, to the heater unit 95 and/or heater cartridge 97.

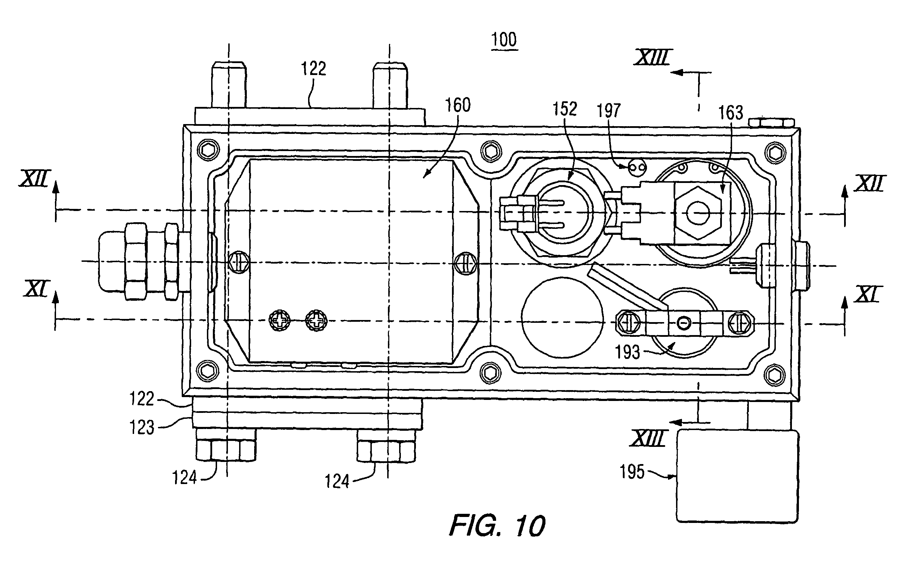

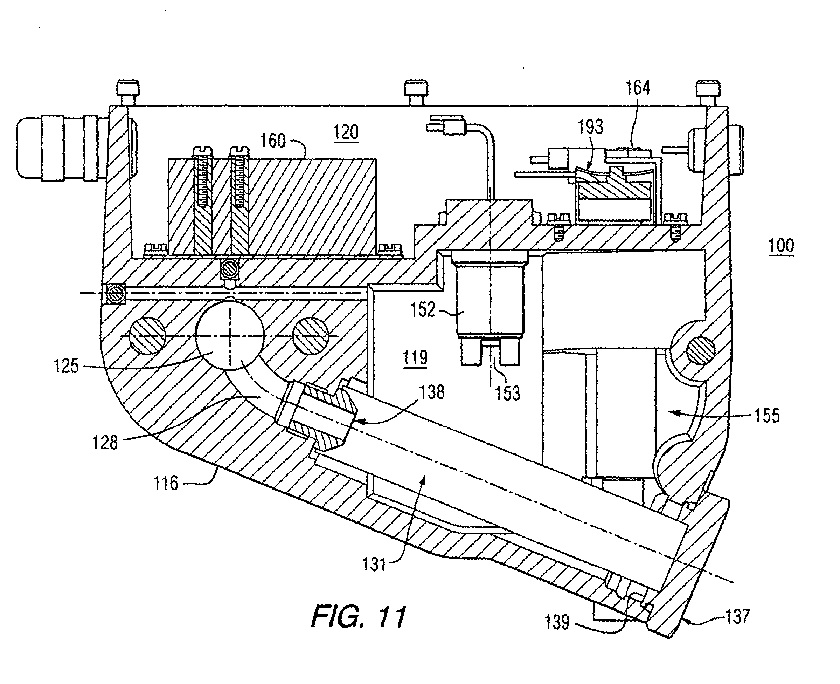

Another embodiment of a self activating drain 100 is illustrated in FIGS. 10 through 15, which can have similar components as the previous described drain 10, including a body 116 in which can be formed an internal cavity that serves as an internal reservoir 119 for fluid accumulated from the main air tank 7 of a locomotive compressor. The drain 100 can likewise have a mounting portion 122 on one side, or both sides of the body 116, to permit mounting the drain 100 on either side of the main air tank, and a fluid level sensor 152 connected to a control module 160 for operation of a pilot valve 164 which controls the opening and closing of a main stage valve piston 163. This embodiment of the drain 100 can also include a temperature sensor 193, a heater unit 195 positioned outside the drain body 116, and a cartridge heater 197 within the drain body 116. The heater unit 195 and cartridge heater 197 can be utilized to heat the drain body 116 and thus the internal reservoir 119. The temperature sensor 193 can detect the temperature, such as, for example, the prevailing temperature in the internal reservoir 119 and/or the ambient temperature. Responsive to detecting that the temperature has dropped below a predetermined temperature, such as could cause fluid in the internal reservoir 119 to freeze, the heater unit 195 and/or cartridge heater 197 can be activated to increase the temperature in the internal reservoir 119. In one embodiment, the temperature sensor 193 can be a temperature switch connected to the cartridge heater 197 to directly activate heating responsive to detection of a predetermined temperature. Also, the heater unit 195 can include an integral temperature sensor therewith and can operate entirely independently of the cartridge heater 197. Alternatively, the temperature sensor 193 could be designed to provide feedback to the control module 160 which could be connected, for activation thereof, to the heater unit 195 and/or heater cartridge 197.

As shown, a first main air inlet passage 125 can be provided in association with the mounting portion 122, and in communication with an air exit port (not shown) of a main air tank of a locomotive compressed air system, such as the main air tank 7 shown in FIG. 1, when the body 116 of the drain 100 is connected to the main air tank. As described in connection with the drain 10, if a mounting portion 122 is provided on each side of the body 116, the main air inlet passage 125 can be provided extending through the body 116, such that opposite ends of the main air inlet passage 125 communicate with the mounting portions 122 on each side of the drain 100. Depending on which side of the drain body 116 is connected to the main air tank, the opposite end of the main air inlet passage 125 communicating with the opposite side of the drain body 116 can be closed off by means of a cover plate 123 and a seal (not shown), such as an o-ring. The cover plate 123 can be secured to the mounting portion 122 on the drain body 116 by, for example, bolts 124 that extend through aligned holes in the cover plate 123 and the body 116. The drain 100 main air tank can be similarly secured by a pair of bolts to the opposite mounting portion 122 on the drain body 116, such as either by holes in a mounting flange, or tapped holes. Also, similarly to the cover plate 123 securement, a seal, such as an o-ring, can be placed between the mounting portion 122 and the exit port face of the main air tank in order to prevent leakage of air or fluid.

A fluid passage 128 communicates between the main air inlet passage 125 and the internal fluid reservoir 119 via a filter 131 to trap entrained contaminants in fluid entering through passage 128 so that particulates, debris and other contaminants that could otherwise interfere with the operation of the drain 100 are removed. In particular, the valve assembly 155 can include a seal 156 and an control orifice member 157 through which the fluid exits the drain 100 at the discharge port 158. Like the control orifice member 57 of the drain 10 described previously, the dimensions of the control orifice member 157 can be designed to allow a predetermined, or estimated, amount of fluid to flow from the internal reservoir through the discharge port 158 over a predetermined, or estimated, period of time. Debris, if not removed by the filter 131, could interfere with the function of the seal 156 to fully seat against the control orifice member 157, or could obstruct the control orifice member 157 and hinder the purge of fluid from the internal reservoir 119 through the discharge port 158. The filter 131 can be removable for regular cleaning in order to prevent the filter 131 from becoming clogged, which could block fluid from passing into the internal reservoir 119 from which it can be expelled. Similarly to the drain 10, a cavity in the drain body 116 can be provided wherein the generally cylindrical filter 131 can be removably positioned. The cavity can be accessed externally via a removable plug 137 to facilitate cleaning or replacement of the filter 131. The lower end of the cavity can be threaded internally and the plug 137 can have external threads so that the plug 137 can simply be screwed into the cavity for easy access to the filter 131. Preferably, the filter 131 is designed to be quickly and easily removed to facilitate cleaning and/or replacement on a periodic basis. Additionally, the threaded end of the removable plug 137 can further have a recessed cylindrical bore which is sized to receive the lower end of the cylindrical filter 131 when the plug 137 is screwed into the lower end of the cavity 134. The opposite, i.e., upper, end of the cylindrical filter 131 communicates with the fluid passage 128 such that fluid and entrained contaminants entering the drain 100 are initially directed through the cylindrical filter 131 so that particulate contaminants are trapped and only fluid may enter into the internal reservoir 119. A nozzle 138 can be provided in the upper end of the cavity intermediate the fluid passage 128 and the cylindrical filter 131. One end of the nozzle 138 communicates with the fluid passage 128 and an opposite end can be designed to seal against the upper end of the cylindrical filter 131. In order to avoid any potential for particulate contaminants entering the internal fluid reservoir 119, both ends of the filter 131 should have a close fit with respective adjacent surfaces, i.e., the nozzle 138 at the top and the plug 137 at the bottom. As a safety feature, the plug 137 can preferably be designed to vent pressure which may be built up inside the drain body before the plug 137 reaches a completely unthreaded condition. As explained in connection with the drain 10, this can be accomplished in any of a number of different manners well known to those of skill in the art, including via a cross-drilled hole 139 in the plug 137.

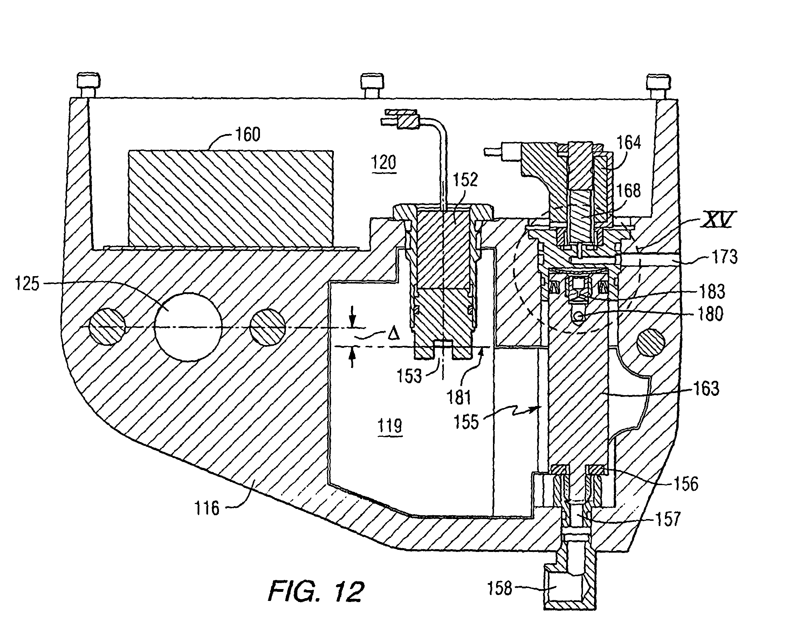

The self actuating drain 100 can have a sensor 152 which detects the level of accumulated fluid in the internal reservoir 119. The sensor 152 can automatically activate a valve assembly 155 to expel the accumulated fluid through a fluid discharge port 158 in the internal reservoir 119 when the fluid therein reaches a predetermined level. This embodiment of the fluid level sensor 152 can be different from the fluid level sensor 52 in the drain 10, in that the sensor 152 is designed to detect the fluid level when the fluid level contacts a lower, u-shaped gap portion 153 of the sensor 152. In one presently preferred embodiment, the sensor 152 can be an ultrasonic gap level transducer. The sensor 152 can utilize two piezo transducers, one on each side of the inverted u-shaped gap 153. One piezo can be used as a transducer to emit sound waves, while the other piezo on the opposite side of the u-shaped gap 153 can be used as a receiving sensor. Because of the high piezo frequency, about 2.5 to 3 MHz, sound attenuation in air is so great that little signal can be transmitted through the u-shaped gap 153. However, when the u-shaped gap 153 is bridged with liquid such as, for example water, oil, or the like, sound conductivity is sufficient to provide an easily detectable signal from the sensor piezo. The sensor 152 provides feedback to a control module 160 which can react by controlling the valve assembly 155 to open the fluid discharge port 158 to drain accumulated fluid from the internal reservoir 119. Similarly to the sensor 52 in the drain 10 described preciously, the sensor 152 can automatically activate a valve assembly 155 to expel the accumulated fluid through a fluid discharge port 158 in the internal reservoir 119 when the fluid therein reaches a predetermined level, as indicated by line 181 in FIG. 12. This level 181 can be set a the same distance "Δ," which can be about 0.25 inches, below the level of generally the center of main air passage 125.

The valve assembly 155 can include a main stage valve piston 163 which controls access to the fluid discharge port 158. In the embodiment shown in FIGS. 10 through 15, the main stage valve piston 163, like the main stage valve piston 63 in the drain 10, can also be held normally closed by a differential pressure across the fluid discharge port 158. This pressure differential is likewise the difference between the pressure in the internal reservoir 119 and atmospheric pressure on the outside. Similarly, a preload, such as provided by a spring washer 159 on the top of the main stage valve piston 163, can also be provided to supplement the closing force so that a failsafe mode is present in the event that the compressed air system were to lose pressure.

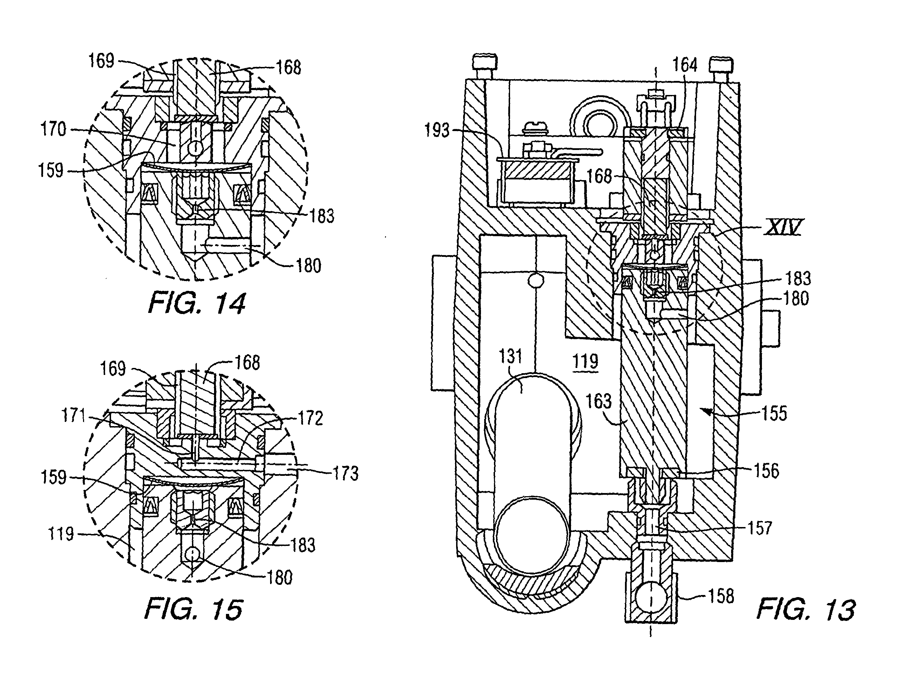

Similarly to the previously described embodiment of the drain 10, a pilot valve 164 can be used to control the main stage valve piston 163 of the drain 100. However, in this embodiment of the drain 100, the pilot valve 164 can be a 2-way normally closed solenoid actuated valve. As in the embodiment of the drain 10 described previously, internal reservoir 119 pressure, which can be, for example, 120 to 140 psi, can be used as pilot pressure for the pilot valve 164. However, as shown best in FIGS. 14 and 15, instead of communicating internal reservoir 119 pressure to the pilot valve 164 via a tube connected the internal reservoir 119, communication with the internal reservoir 119 can be provided via an elbow shaped passageway 180 in the main stage valve piston 163. The passageway 180 can communicate up through the center of the main stage valve piston 163 onto the top thereof. A restriction 183 can be provided inside the main stage valve piston 163, intermediate the passageway 180 and the top of the main stage valve piston 163. By providing appropriate ports, such as ports 170, pressure from the top of the main stage valve piston 163 can communicate with space 169, which communicates around the sides and on top of the solenoid 168. This pressure tends to hold the solenoid 168 in the normally closed, de-energized state illustrated. A screen 179 can be provided between passageway 180 and the restriction 183 to generally block small particles of debris or other contaminants which may have been small enough to enter into the internal reservoir through the filter 31. Such debris could interfere with the proper functioning of the pilot valve 164. As described, pressurized air from the internal reservoir 119 communicates through the restriction 183 via passageway 180 onto the top of the main stage valve piston 163, thus holding the main stage valve piston 163 closed against the fluid discharge port 158. This pressure, along with a preload, such as spring washer 159, can provide failsafe operation even without electrical power. In the de-energized state shown, the solenoid is seated down against a small bleed port 171 which communicates with atmosphere via passageway 172 connected to exhaust port 173. If the coil of the pilot valve 152 is energized, the solenoid 168 will move upwards, connecting the exhaust port 173 to the top of the main stage valve piston 163 via ports 170, 171, 172. Consequently, energization of the solenoid 168 exhausts to atmosphere the internal reservoir pressure acting on top of the main stage valve piston 163, thus creating a large pressure differential across the bottom of the main stage valve piston 163. This causes the main stage valve piston 163 to unseat, permitting fluid accumulated in the internal reservoir 119 to drain out through the discharge port 158. The control module 160 can hold the main stage valve piston 163 open for a predetermined time period to permit accumulated fluid to drain from the internal reservoir 119. While the fluid is being purged from the internal reservoir 119, pressurized air will continue to escape to atmosphere through the exhaust port 173 via port 180 and restriction 183 in the main stage valve piston 163. However, because the restriction 183 is much smaller than the fluid discharge port 158, generally only a negligible amount of pressurized air will be lost to the atmosphere in this manner.

The activation of the pilot valve 164 can be regulated by the control module 160 based on feedback received from the sensor 152 that detects the fluid level in the internal reservoir 119. When the fluid level reaches the predetermined level, the control module 160 can energize the pilot valve 164 to open the main valve piston 163 and permit accumulated fluid to drain from the internal reservoir 119. The control module 160 can, via the pilot valve 164, cause the main stage valve piston 163 to remain unseated for a predetermined time period prior to permitting the piston 163 to reseat and close the fluid discharge port 158. Pressurized air would also be discharged through the fluid discharge port 158 if the discharge port 158 were to remain open after all of the fluid had been discharged. Therefore, the time interval for holding the main stage valve piston 163 open can be set so as to allow only accumulated fluid in the internal reservoir 119 to drain, and to generally prevent the escape of pressurized air through the fluid discharge port 158. In one embodiment, the control module 160 can provide line voltage transient protection, drivers and signal recognition for the ultrasonic gap level transducer, a 48 volt power source to operate pilot valve with preset delay and valve open cycles to compensate for condensate sloshing action, and can also control the amount of fluid accumulated in the internal reservoir 119 to be drained. However, a 24 volt powered source could be used. Limiting the open time of the main stage valve 163 can allow a maximum amount of fluid to be drained from the internal reservoir 119 while avoiding leakage of pressurized air. A delay in the opening of the main stage valve piston 163 can be provided via the control module 160 in order to dampen response to the fluid level in the internal reservoir 119. This can be done so that sloshing, arising from the motion of the train, generally does not cause the sensor 152 to prematurely open the main stage valve piston, as when there is actually less than the desired amount of fluid collected in the internal reservoir 119.

Although certain embodiments of the invention have been described in detail, it will be appreciated by those skilled in the art that various modifications to those details could be developed in light of the overall teaching of the disclosure. Accordingly, the particular embodiments disclosed herein are intended to be illustrative only, and not limiting to the scope of the invention which should be awarded the full breadth of the following claims and any and all embodiments thereof.

## Claims

1. An automatic drain comprising:
a drain body (16; 116) having an inlet passage (25, 28; 125, 128) and an internal fluid reservoir (19; 119), said inlet passage having one end communicating with said internal reservoir and a second end connectible to a compressed air container (7);
a filter (31; 131) disposed intermediate said internal fluid reservoir (19; 119) and said inlet passage (25, 28; 125, 128) such that fluid and any entrained debris from said compressed air container (7) passes through said filter prior to entering said internal fluid reservoir;
a discharge port (58; 158) communicating with said internal fluid reservoir (19; 119);
a valve assembly (55; 155) controllable to selectively open and close said discharge port (58; 158) to expel said fluid from said internal fluid reservoir (19; 119).

2. The automatic drain of claim 1 further comprising a controller (60; 160) operatively associated with said valve assembly (55; 155) to selectively open and close said discharge port (58; 158).

3. The automatic drain of claim 1 or claim 2 wherein said filter (31; 131) is removable.

4. The automatic drain of any one of claims 1-3 further comprising a fluid level sensor (52; 152) detecting a fluid level in said internal fluid reservoir (19; 119) and providing feedback to a controller (60; 160) to cause said valve assembly (55; 155) open said discharge port (58; 158) responsive to detection of a predetermined fluid level in said internal fluid reservoir.

5. The automatic drain of claim 4 wherein said fluid level sensor (52; 152) uses is an ultrasonic sensor.

6. The automatic drain of claim 4 or claim 5 further comprising said controller (60; 160) causing said valve assembly (55; 155) to close said discharge port (58; 158) after a predetermined time interval.

7. The automatic drain of any one of claims 1-6 wherein said valve assembly (55; 155) further comprises a main stage valve (63; 163) piloted by a solenoid valve (64; 164).

8. The automatic drain of claim 7 wherein pressure in said internal fluid reservoir (19; 119) is used as pilot pressure for said solenoid valve (64; 164).

9. The automatic drain of claim 8 wherein said pilot pressure is communicated from said internal fluid reservoir (19; 119) to said solenoid valve (64; 164) through said drain body (16; 116).

10. The automatic drain of claim 8 wherein said pilot pressure is communicated from said internal fluid reservoir (19; 119) to said solenoid valve (64; 164) through said main stage valve (63; 163).

11. The automatic drain of any one of claims 7-10 further comprising a restriction in said main stage valve (63; 163) intermediate said internal fluid reservoir (19; 119) and said solenoid valve (64; 164).

12. The automatic drain of any one of claims 1-11 further comprising:
a temperature sensor (93; 193) to detect at least one of ambient temperature and the temperature in said internal fluid reservoir (19; 119); and
a heater (95; 195) to increase the temperature in said internal fluid reservoir (19; 119) responsive to said temperature sensor (93; 193) detecting a predetermined temperature of at least one of said ambient temperature and said temperature in said internal fluid reservoir.

13. The automatic drain of claim 12 wherein said heater (95; 195) further comprises a cartridge heater (97; 197) to heat said drain body (16; 116) to increase said temperature in said internal fluid reservoir (19; 119).

14. The automatic drain of claim 13 wherein said temperature sensor (93; 193) further comprises a temperature switch, said temperature switch automatically activating said cartridge heater (97; 197) responsive detecting said predetermined temperature.
